# EUROPÄISCHE PATENTANMELDUNG

(11) **EP 0 694 250 A1**
(43) Veröffentlichungstag der Anmeldung: **31.01.1996**
(21) Anmeldenummer: 95110845.5
(22) Anmeldetag: 11.07.1995
(51) Int. Cl.: A01F 12/44

(54) **Reinigungsvorrichtung**

(30) Priorität: 25.07.1994 US 280231
(71) Anmelder: DEERE & COMPANY, Moline, Illinois 61265 (US)
(72) Erfinder: Skinner, David Alden, Moline, Illinois 61265 (US); Pearson, Mark Leonard, LeClaire, Iowa 52753 (US)
(74) Vertreter: Feldmann, Bernhard

(57) **Zusammenfassung**

Eine Reinigungsvorrichtung (26) einer Dreschmaschine, insbesondere eines Mähdreschers, die einen Gutstrom mit hohem und einen Gutstrom mit geringem Anteil an abzuscheidendem Gut verarbeitet, weist einen Trennboden (50) auf, der ein Vermischen beider Gutströme verhindert und bewirkt, daß sie an unterschiedlichen Stellen auf ein Sieb (44) gelangen, so daß insgesamt eine effektivere Reinigung erzielt wird.

## Beschreibung

Die Erfindung betrifft eine Reinigungsvorrichtung einer Dreschmaschine mit einem ersten und einem zweiten Zuführboden, von denen einer einen Gutstrom mit höherem und einer einen Gutstrom mit geringerem Abscheidebedarf führt, die jeweils einem Sieb aufgeben werden.

Aus der US-A-4,531,528 geht ein Mähdrescher mit einer Drescheinheit, mehreren Schüttlern, einem Vorbereitungsboden und einem Siebkasten hervor. Die Drescheinheit scheidet einen großen Anteil der Kornmasse aus dem Erntegut ab und gibt diesen vermischt mit Spreu auf den Vorbereitungsboden, um ihn dem Siebkasten zuzuführen. Dieses Gemenge enthält bereits einen sehr großen Anteil an Körnern und nur einen geringen Anteil an Spreu. Der Rest des Ernteguts, normalerweise Stroh, wird auf die Schüttler geworfen, um evtl. darin enthaltene Körner abzuscheiden. Mit diesen Körnern wird allerdings auch ein großer Anteil an Spreu herausgeschüttelt. Unterhalb der Schüttler erstreckt sich eine oszillierend angetriebene Wanne, die die Körner und die Spreu aus den Schüttlern auffängt und dieses Gemenge mit dem geringen Kornanteil dem Vorbereitungsboden aufgibt. Von dem Vorbereitungsboden gelangen beide Gemengeströme zu dem Siebkasten, wo sie zunächst auf ein Kurzstrohsieb fallen, durch das die Körner hindurchfallen können, während die Spreu am rückwärtigen Ende des Mähdreschers von einem Gebläse ausgeworfen wird.

Hier tritt das Problem auf, daß beide Gutströme nach ihrer Vereinigung ein schwer zu trennendes Gemenge ergeben, das von dem Gebläsestrom unter Umständen nur schwer zu durchdringen ist.

Dieses Problem wird erfindungsgemäß durch die Lehre des Patentanspruchs 1 gelöst, wobei in den davon abhängigen Patentansprüchen Merkmale aufgeführt sind, die diese Lehre in vorteilhafter Weise weiterentwickeln.

Auf diese Weise gelangt der Gutstrom mit dem hohen Anteil an abzuscheidendem Gut, nämlich Spreu, auf die Oberseite des insbesondere in einem Siebkasten gelagerten Siebs, so daß der sich bildende Materialteppich leichter getrennt werden kann. Dies folgt daraus, daß die leichten Teile obenauf liegen und leicht von der durchströmenden Luft ausgetragen werden können. Bei bekannten Vorrichtungen müssen die leichten Teile zunächst aus dem Gemenge gelöst werden. Es findet also keine Vermischung beider Gutströme mehr statt.

Wenn der Trennboden einen Stufenbodenabschnitt enthält, kann das Gemenge mit dem großen Spreuanteil aufgelockert werden und aufgrund des unterschiedlichen spezifischen Gewichts bereits vorgetrennt werden.

Ein perforierter, d. h. durchlässiger Abschnitt, der vorzugsweise mit dem Stufenbodenabschnitt vorgesehen ist, läßt von dem Reinigungsgebläse kommende Luft hindurch und ermöglicht so die Entfernung der leichteren Spreu.

Die Abscheidewirkung des Trennbodens wird verstärkt, wenn er geradlinig oder auf einer Kurvenbahn in mehreren Richtungen bewegt wird und so das Gut weiterbefördert und auflockert. Insbesondere dann, wenn der Trennboden mit dem Siebkasten oder einem Sieb verbunden ist, können Antriebsmittel eingespart und eine ausgewuchtete Bewegung der Komponenten erzeugt werden.

Die geneigte Anordnung des Trennbodens hin zu seiner Abgabestelle stellt sicher, daß das Gut nicht anhaftet oder sich aufbaut, was zu Verstopfungen führen könnte.

Eine besonders hohe Abscheidewirkung wird erreicht, wenn auch der Spalt zwischen dem Trennboden und dem Sieb von einem Luftstrom aus dem Reinigungsgebläse durchströmt wird, wozu gegebenenfalls ein eigener Luftauslaßkanal vorgesehen wird. Diese Wirkung rührt insbesondere daher, daß es effizienter ist, einen dünnen als einen dicken Stoffstrom zu durchdringen.

Wenn am stromabwärts gelegenen Ende des ersten Zuführbodens, d. h. im Übergangsbereich zu dem Sieb, ebenfalls ein Stufenboden und/oder diesem nachfolgend ein Fingerrechen vorgesehen ist, findet stets eine weitere Auflockerung und somit eine bessere Vorbedingung für die Reinigung des Gemengestroms statt.

Die Verstellbarkeit des Trennbodens macht es möglich, die Reinigungsvorrichtung auf unterschiedliche Ernte- oder Gutbedingungen einzustellen bzw. diesen anzupassen.

In der Zeichnung ist ein nachfolgend näher beschriebenes Ausführungsbeispiel der Erfindung dargestellt. Es zeigt:
- Figur 1: eine Dreschmaschine mit einer Reinigungsvorrichtung in Seitenansicht und

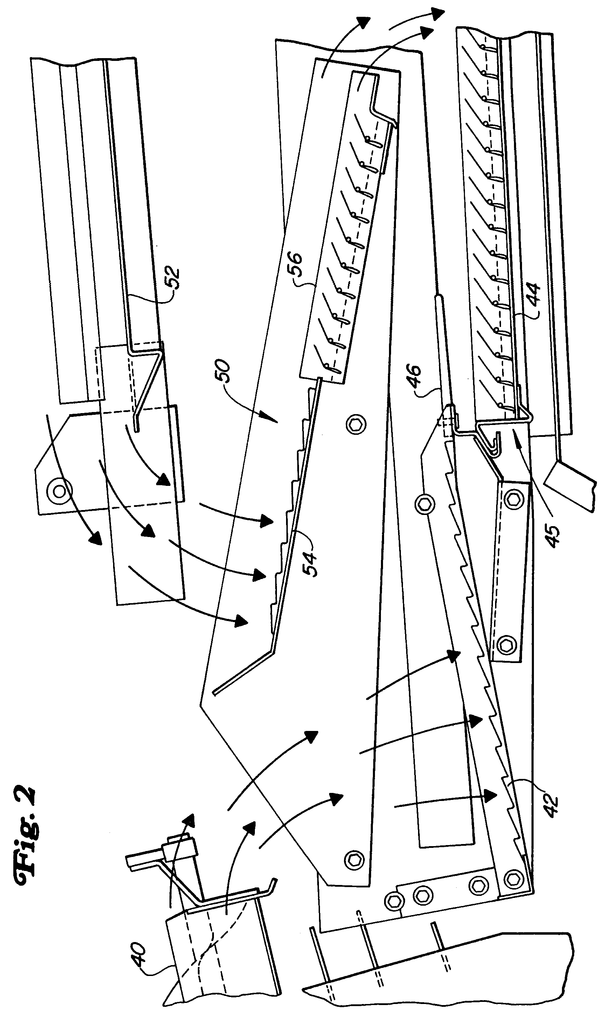

- Figur 2: die Reinigungsvorrichtung aus Figur 1 in vergrößerter Darstellung und in Seitenansicht.

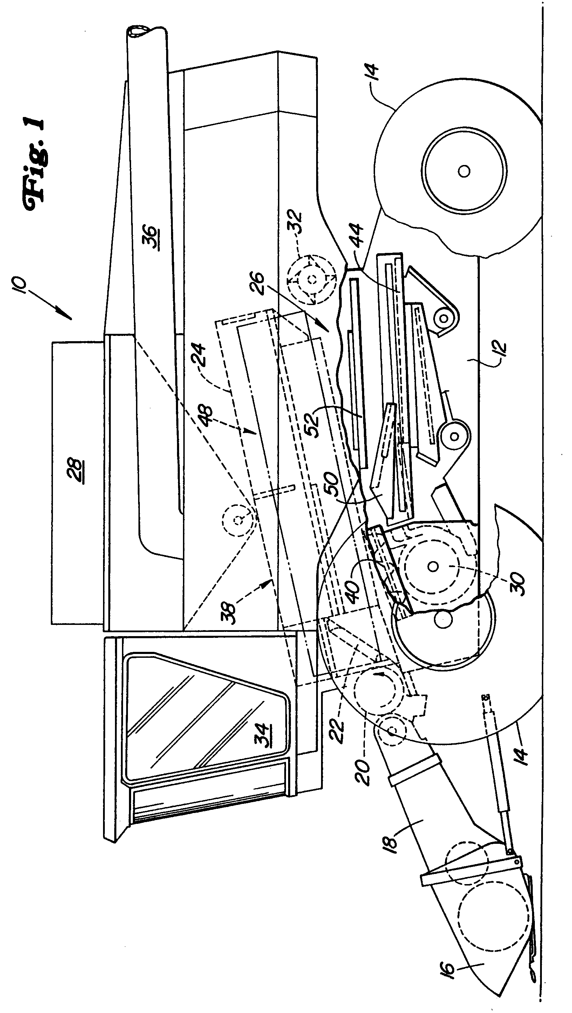

Figur 1 ist eine Seitenansicht einer Dreschmaschine 10 in der Art eines selbstfahrenden landwirtschaftlichen Mähdreschers. Diese Dreschmaschine 10 enthält ein Traggestell 12 mit Rädern 14, die dieses Traggestell 12 auf dem Boden abstützen. Das Traggestell 12 enthält zwei sich längs erstreckende Seitenwände, zwischen denen verschiedene Bearbeitungsvorrichtungen angeordnet sind. Von der Dreschmaschine 10 erstreckt sich nach vorne eine Erntebergungsvorrichtung 16 in der Art eines Schneidwerks, die geerntetes Gut einem Schrägförderer 18 zuleitet. Der Schrägförderer 18 ist eine Fördervorrichtung, die geerntetes Gut, z. B. Getreide, Dresch-, Abscheide- und Reinigungsvorrichtungen zwischen Seitenwänden der Dreschmaschine 10 zuführt, wo es jeweils entsprechend bearbeitet wird. Obwohl die vorliegende Erfindung im Zusammenhang mit einem sogenannten Axialmähdrescher gezeigt und erläutert wird, kann sie selbstverständlich in Dreschmaschinen 10 anderer, insbesondere herkömmlicher, Bauart wie auch in stationären Reinigungsanlagen mit einer Reinigungsvorrichtung 26, insbesondere in der Art wenigstens eines Siebs oder eines Siebkastens, verwendet werden.

Bei dem gezeigten Ausführungsbeispiel der Dreschmaschine 10 führt der Schrägförderer 18 das Erntegut einer querliegenden Trommel 20 zu, die es durch einen Übergangsabschnitt 22 einer axial wirkenden Dresch- und Abscheidevorrichtung 24 aufgibt. Das Getreide und die Spreu werden von dieser Dresch- und Abscheidevorrichtung 24 einer erfindungsgemäßen Reinigungsvorrichtung 26 aufgegeben. Von der Reinigungsvorrichtung 26 aus gelangt gereinigtes Getreide in einen Korntank 28, während die Spreu mittels eines in diesem Ausführungsbeispiel drei Auslaßschächte aufweisenden Reinigungsgebläses 30 zum rückwärtigen Ende der Dreschmaschine 10 hinausgeblasen wird. Erntegut, das weder gereinigtes Getreide noch Spreu ist, wird von der axialen Dresch- und Abscheidevorrichtung 24 einer ebenfalls quer gelagerten Trommel 32 zugeführt, die es wiederum zum rückwärtigen Ende der Dreschmaschine 10 auswirft. In dem Korntank 28 zwischenzeitlich gelagertes gereinigtes Getreide kann von einer sich in einer Fahrerkabine 34 befindlichen Bedienungsperson durch die Inbetriebnahme einer Entladeschnecke 36 ausgetragen werden.

Obwohl dies nicht so genau zu trennen ist wie bei einer herkömmlichen Dreschmaschine 10, ist auch die axiale Dresch- und Abscheidevorrichtung 24 mit einer Drescheinrichtung 38 versehen, die ein Gemenge mit großem Korn- und kleinem Spreuanteil erzeugt, das einem Förderschnecken aufweisenden ersten Zuführboden 40 aufgegeben wird und einen geringen Abscheidebedarf hat. Selbstverständlich können auch anders aufgebaute Zuführböden verwendet werden. Der Zuführboden 40 leitet dieses Gemenge mit großem Korn- und kleinem Spreuanteil einem Stufenboden 42 zu, der zu einem als Kurzstrohsieb ausgebildeten Sieb 44 führt. Das von dem Zuführboden 40 kommende Gemenge aus vielen Körnern und wenig Spreu fällt durch zwei von dem Reinigungsgebläse 30 abgegebene Luftströme hindurch. Der Stufenboden 42 oszilliert mit dem Sieb 44 oder bewegt sich mit diesem hin und her und führt das Gemenge aus vielen Körnern und wenig Spreu auf sich und durch einen Fingerrechen 46 zu dem stromaufwärts gelegenen Ende 45 des Siebs 44, das an sich in diesem Fall als ein herkömmliches Lamellensieb ausgebildet ist.

Das Gemenge aus wenigen Körnern und viel Spreu - also ein solches mit einem hohen Abscheidebedarf - aus einem Abscheideabschnitt 48 der Dresch- und Abscheidevorrichtung 24 wird mittels eines zweiten Zuführbodens 52 einem als Vorreiniger dienenden Trennboden 50 zugeführt. Der Trennboden 50 ist an das Sieb 44 angeschlossen und bewegt sich mit diesem. Der Trennboden 50 ist mit einem Stufenbodenabschnitt 54 und einem durchlässigen Abschnitt 56, der in diesem Ausführungsbeispiel Lamellen enthält, ausgestattet. Das Gemenge aus wenigen Körnern und viel Spreu wird zuerst dem Stufenbodenabschnitt 54 zugeleitet, der selbst es dem durchlässigen Abschnitt 56 aufgibt. Einige der Körner und einiges an Spreu fällt durch den durchlässigen Abschnitt 56 auf das Sieb 44. Der Rest dieses so vorgereinigten Gemenges aus wenigen Körnern und viel Spreu fällt an der endseitig bestehenden Stufe am stromabwärts gelegenen Ende des durchlässigen Abschnitts 56 auf das Sieb 44. Das Gemenge aus wenigen Körnern und viel Spreu gelangt auf das Sieb 44 an einer Stelle, die stromabwärts von der Stelle liegt, an der das Gemenge aus vielen Körnern und wenig Spreu auf das Sieb 44 gelangt.

## Patentansprüche

1. Reinigungsvorrichtung (26) einer Dreschmaschine (10) mit einem ersten und einem zweiten Zuführboden (40 und 52), von denen einer einen Gutstrom mit höherem und einer einen Gutstrom mit geringerem Abscheidebedarf führt, die jeweils einem Sieb (44) aufgeben werden, dadurch gekennzeichnet, daß im Flußbereich des Gutstroms mit höherem Abscheidebedarf ein Trennboden (50) zwischen wenigsten einem der Zuführböden (40, 52) und dem Sieb (44) vorgesehen ist, der diesen Gutstrom einer Stelle des Siebs (44) aufgibt, die stromabwärts der Aufnahmestelle des Gutstroms mit geringerem Abscheidebedarf liegt.

2. Reinigungsvorrichtung nach Anspruch 1, dadurch gekennzeichnet, daß der Trennboden (50) einen Stufenbodenabschnitt (54) enthält.

3. Reinigungsvorrichtung nach Anspruch 1 oder 2, dadurch gekennzeichnet, daß der Trennboden (50) einen durchlässigen Abschnitt (56), insbesondere mit einem Abstand zwischen sich belassenden Lamellen, enthält.

4. Reinigungsvorrichtung nach einem oder mehreren der vorherigen Ansprüche, dadurch gekennzeichnet, daß der Trennboden (50), insbesondere gemeinsam mit dem Sieb (44), oszillierend oder hin und her bewegbar ist.

5. Reinigungsvorrichtung nach einem oder mehreren der vorherigen Ansprüche, dadurch gekennzeichnet, daß der Trennboden (50) zu dem Sieb (44) abfallend ausgebildet oder angeordnet ist.

6. Reinigungsvorrichtung nach einem oder mehreren der vorherigen Ansprüche, dadurch gekennzeichnet, daß der Trennboden (50) einem Luftstrom eines Reinigungsgebläses (30) ausgesetzt ist.

7. Reinigungsvorrichtung nach einem oder mehreren der vorherigen Ansprüche, dadurch gekennzeichnet, daß dem stromaufwärts gelegenen Ende des Siebs (44) ein Stufenboden (42) vorgeschaltet ist, dem der Gutstrom mit dem geringeren Abscheidebedarf aufgegeben wird.

8. Reinigungsvorrichtung nach Anspruch 7, dadurch gekennzeichnet, daß zwischen dem Stufenboden (42) und dem Sieb (44) ein Fingerrechen (46) vorgesehen ist.

9. Reinigungsvorrichtung nach einem oder mehreren der vorherigen Ansprüche, dadurch gekennzeichnet, daß der Trennboden (50) in der Höhe und/oder Neigung verstellbar ist.
